# EUROPEAN PATENT APPLICATION

(11) **EP 3 671 943 A1**
(43) Date of publication of application: **24.06.2020**
(21) Application number: 18859523.5
(22) Date of filing: 19.09.2018
(51) Int. Cl.: H01M 10/613, A62C 3/06, H01M 2/10, H01M 10/625, H01M 10/647, H01M 10/653, H01M 10/6552, H01M 10/6557, H01M 10/6569

(54) **ELECTRICITY STORAGE DEVICE**

(30) Priority: 22.09.2017 JP 2017182894; 22.09.2017 JP 2017182895
(71) Applicant: GS Yuasa International Ltd., Kyoto-shi, Kyoto 601-8520 (JP)
(72) Inventor: INAMASU, Tokuo, Kyoto-shi Kyoto 601-8520 (JP); MUKAI, Hiroshi, Kyoto-shi Kyoto 601-8520 (JP); OKUYAMA, Ryoichi, Kyoto-shi Kyoto 601-8520 (JP)
(74) Representative: Isarpatent
(86) International application number: PCT/JP2018/034535
(87) International publication number: WO 2019/059198

(57) **Abstract**

The energy storage apparatus 100 includes a plurality of energy storage devices 1 and a cooling module 30 that cools the energy storage device 1. The cooling module 30 has a cooling unit 31 that is disposed at least between the energy storage devices 1, incorporates a flame retardant, and cools the energy storage device 1 by heat absorption at vaporization of the flame retardant. In the cooling unit 31 in contact with the energy storage device 1 in which heat is generated, the storage device 1 is cooled well by the heat of vaporization when the incorporated flame retardant vaporizes, and a chain of overheating between the energy storage devices 1 is prevented.

## Description

### TECHNICAL FIELD

The present invention relates to an energy storage apparatus including a plurality of energy storage devices.

### BACKGROUND ART

Chargeable/dischargeable energy storage devices are used in various devices such as mobile phones and automobiles. In particular, vehicles powered by electric energy, such as electric vehicles (EV) and plug-in hybrid electric vehicles (PHEV), require large amounts of energy, so they are equipped with a large-capacity energy storage apparatus including a plurality of energy storage devices.

In such an energy storage apparatus, when the temperature of any one of the energy storage devices excessively rises due to some reason, which is not a normal use state, heat of this energy storage device is conducted to an adjacent energy storage device, so that the adjacent energy storage device is heated. Thereby, when an active material of an electrode of the adjacent energy storage device is heated to a temperature equal to or higher than self-heating temperature, the adjacent energy storage device also becomes overheated due to self heat generation, and heats a further next energy storage device, and a large number of energy storage devices may be overheated in a chained manner.

When using an energy storage device in which a metal case is covered with a resin film, if the energy storage device is overheated, the resin film melts and the metal cases contact each other to promote heat conduction, resulting in easily causing a chain of overheating. In particular, when a metal case is used as an electrode or when a metal case has an abnormal potential due to some abnormality, an abnormal current is generated in an adjacent energy storage device by electrically contacting with a case of the adjacent energy storage device, which may cause overheating.

Patent Document 1 discloses a technique for suppressing conduction of heat of an energy storage device to adjacent energy storage devices.

When the energy storage device is a nonaqueous electrolyte secondary battery, one in which an electrolyte such as lithium hexafluorophosphate (LiPF₆) is dissolved in a nonaqueous solvent containing ethylene carbonate as a main component is widely known. These nonaqueous solvents generally volatilize easily and are flammable. Therefore, it is required to suppress fire in an energy storage apparatus.

Patent Document 2 discloses that a nonaqueous electrolyte contains an acyclic fluorinated ether containing at least one -CF₂H group at the end, a cyclic carbonate compound having a carbon-carbon π bond, and sultone, and the nonaqueous electrolyte is made flame retardant.

Patent Document 3 discloses that a nonaqueous electrolyte contains a fluorinated phosphate ester and/or fluorinated chain carbonate having a side chain having 3 or less carbon atoms, the ratio of these nonaqueous electrolytes in the solvent is set to 15 to 30% by mass, and the nonaqueous electrolyte is made flame retardant.

### PRIOR ART DOCUMENTS

### PATENT DOCUMENTS

Patent Document 1: JP-A-2015-195149
Patent Document 2: JP-B-5092416
Patent Document 3: JP-B-5842873

### SUMMARY OF THE INVENTION

### PROBLEMS TO BE SOLVED BY THE INVENTION

In the energy storage apparatus of Patent Document 1, conduction of heat between the energy storage devices is suppressed by a partition member formed of mica laminated wood.

In recent years, a further increase in the capacity of an energy storage device and an energy storage apparatus has been required. When the capacity of the energy storage device is increased, the energy and heat released from the energy storage device when one energy storage device is overheated are also very large. Increasing the thickness of an air layer between the energy storage devices and the thickness of the partition member can increase heat insulation properties, but by these methods, the energy density as the energy storage apparatus is reduced. Therefore, a new measure that can prevent a chain of overheating between the energy storage devices without lowering the energy density has been required.

In order to prevent the nonaqueous electrolyte of the nonaqueous electrolyte secondary battery from exhibiting sufficient flame retardancy in order to prevent fire of the energy storage apparatus, it is necessary to mix a large amount of fluorinated carbonate and the like. However, there is a limit to the addition amount of fluorinated carbonate and the like to obtain good battery characteristics.

An object of the present invention is to provide an energy storage apparatus capable of preventing the chain of overheating between the energy storage devices and suppressing fire.

### MEANS FOR SOLVING THE PROBLEMS

An energy storage apparatus according to a first aspect of the present invention includes a plurality of energy storage devices, and a cooling unit that is disposed at least between the energy storage devices, incorporates a flame retardant, and cools the energy storage device by heat of vaporization of the flame retardant.

An energy storage apparatus according to a second aspect of the present invention includes a plurality of energy storage devices, and a cooling unit for cooling the energy storage device, in which the cooling unit has a heat transfer unit that incorporates a liquid, is disposed at least between the energy storage devices, and contacts the energy storage device to cool the energy storage device by heat of vaporization of the liquid.

### ADVANTAGES OF THE INVENTION

According to the first aspect of the present invention, in the cooling unit, the incorporated flame retardant absorbs heat from the energy storage device and evaporates, and the energy storage device is cooled well. Since the cooling unit is disposed at least between the energy storage devices, conduction of heat to an energy storage device adjacent to a heated energy storage device is suppressed. Therefore, chain heat transfer between the energy storage devices is prevented.

Since the flame retardant is incorporated in the cooling unit, it is vaporized, then liquefied in the cooling unit and reused for cooling the energy storage device, and the energy storage device is efficiently cooled.

When the flame retardant is vaporized and released from the cooling unit and a flammable component is released from the energy storage device, the flammable component is made flame-retardant by the flame retardant, so that fire is prevented or suppressed in the energy storage apparatus.

According to the second aspect of the present invention, in the heat transfer unit in contact with the heated energy storage device, the incorporated liquid absorbs heat from the energy storage device and evaporates, and the energy storage device is cooled well. Since the heat transfer unit is disposed at least between the energy storage devices, conduction of heat to an energy storage device adjacent to a heated energy storage device is suppressed, and when there are three or more energy storage devices, chain heat transfer to a further adjacent energy storage device is suppressed. That is, the chain of overheating between the energy storage devices is favorably prevented.

Further, since the liquid is incorporated in the heat transfer unit, it is vaporized, then liquefied in the heat transfer unit and reused for cooling the energy storage device, and the energy storage device is efficiently cooled.

### BRIEF DESCRIPTION OF THE DRAWINGS

Fig. 1 is a perspective view of an energy storage device.
Fig. 2 is a perspective view of an energy storage apparatus according to a first embodiment.
Fig. 3 is a perspective view of a cooling module.
Fig. 4 is a sectional view taken along line IV-IV of Fig. 3.
Fig. 5 is an explanatory diagram illustrating cooling by a cooling module when an energy storage device generates heat.
Fig. 6 is an explanatory diagram illustrating suppression of fire by a flame retardant.
Fig. 7 is a perspective view of a cooling module according to a second embodiment.
Fig. 8 is an explanatory diagram of a case where internal spaces are communicated in the second embodiment.
Fig. 9 is an explanatory diagram illustrating suppression of fire by a flame retardant.
Fig. 10 is a perspective view of a cooling module according to a third embodiment.
Fig. 11 is a perspective view of an energy storage apparatus according to a fourth embodiment.
Fig. 12 is a sectional view showing a modified example of a cooling unit (heat transfer unit).

### MODE FOR CARRYING OUT THE INVENTION

Hereinafter, the present invention will be specifically described with reference to the drawings illustrating embodiments thereof.

### (First Embodiment)

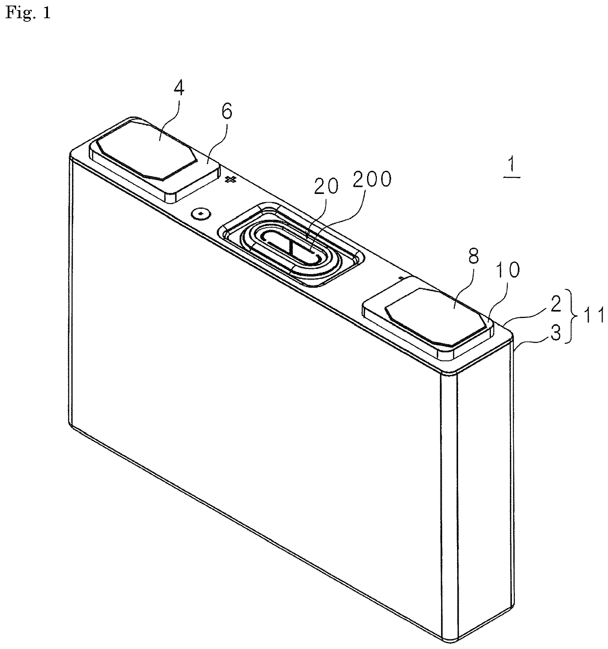

Fig. 1 is a perspective view of an energy storage device 1. Hereinafter, a case where the energy storage device 1 is a lithium ion secondary battery will be described, but the energy storage device 1 is not limited to a lithium ion secondary battery.

The energy storage device 1 includes a case 11 having a cover plate 2 and a case body 3, a positive electrode terminal 4, a negative electrode terminal 8, gaskets 6, 10, a rupture valve 20, a current collector, and an electrode assembly (not shown).

The case 11 is made of, for example, a metal such as aluminum, an aluminum alloy or stainless steel, or a synthetic resin, has a rectangular parallelepiped shape, and stores an electrode assembly and an electrolyte solution (not shown). Alternatively, the case may be a pouch case using a laminate sheet.

The positive electrode terminal 4 has a shaft portion penetrating the cover plate 2 and a plate portion provided at one end of the shaft portion.

The positive electrode terminal 4 is provided so as to penetrate the cover plate 2 in a state where the inner surface of the plate portion and the shaft portion are covered with the gasket 6 and insulated.

The negative electrode terminal 8 has a shaft portion penetrating the cover plate 2 and a plate portion provided at one end of the shaft portion. The negative electrode terminal 8 is provided so as to penetrate the cover plate 2 in a state where the inner surface of the plate portion and the shaft portion are covered with the gasket 10 and insulated.

The electrode assembly may be a lamination type having a main body formed in a rectangular parallelepiped shape by alternately laminating a plurality of positive electrode plates and negative electrode plates via separators, and a positive electrode tab and a negative electrode tab extending from the main body toward the cover plate 2. The positive electrode tab is connected to the positive electrode terminal 4 via a current collector. The negative electrode tab is connected to the negative electrode terminal 8 via a current collector.

The electrode assembly may be a wound type obtained by winding a positive electrode plate and a negative electrode plate in a flat shape via a separator.

The electrode assembly is more preferably a lamination type in which swelling accompanying charge-discharge cycles (swelling of an outer case such as a metal case or a pouch case like the case 11) is small. Since the swelling of the outer case accompanying charge-discharge cycles is small, pressing of the cooling unit 31 by the outer case described later is suppressed during normal use.

The positive electrode plate is one in which a positive active material layer is formed on a positive electrode substrate foil which is a plate-shaped (sheet-shaped) or long strip-shaped metal foil made of aluminum, an aluminum alloy, or the like. The negative electrode plate is one in which a negative active material layer is formed on a negative electrode substrate foil which is a plate-shaped (sheet-shaped) or long strip-shaped metal foil made of copper, a copper alloy, or the like. The separator is a microporous sheet made of a synthetic resin.

As a positive active material used for the positive active material layer, or a negative active material used for the negative active material layer, a known material can be appropriately used as long as it is a positive active material or negative active material capable of absorbing and desorbing lithium ions.

As the positive active material, for example, a polyanion compound such as LiMPO₄, Li₂MSiO₄ or LiMBO₃ (M is one or more transition metal elements selected from Fe, Ni, Mn, Co, and the like), a spinel compound such as lithium titanate or lithium manganese oxide, a lithium transition metal oxide such as LiMO2 (M is one or more transition metal elements selected from Fe, Ni, Mn, Co, and the like) or the like can be used.

Examples of the negative active material include, other than a lithium metal and lithium alloys (lithium metal-containing alloys such as lithium-aluminum, lithium-silicon, lithium-lead, lithium-tin, lithium-aluminum-tin, lithium-gallium, and wood alloy), alloys capable of absorbing and desorbing lithium, carbon materials (e.g., graphite, hardly graphitizable carbon, easily graphitizable carbon, low-temperature baked carbon, amorphous carbon, etc.), metal oxides (SiO, etc.), lithium metal oxides (Li₄Ti₅O₁₂, etc.), polyphosphate compounds, and the like.

The rupture valve 20 has a rupture portion 200 formed by partially reducing the plate thickness. When the internal pressure of the energy storage device 1 increases, the energy storage device 1 breaks along the rupture portion 200 to form a tongue-shaped portion, and the portion jumps outward to form an opening in the cover plate 2.

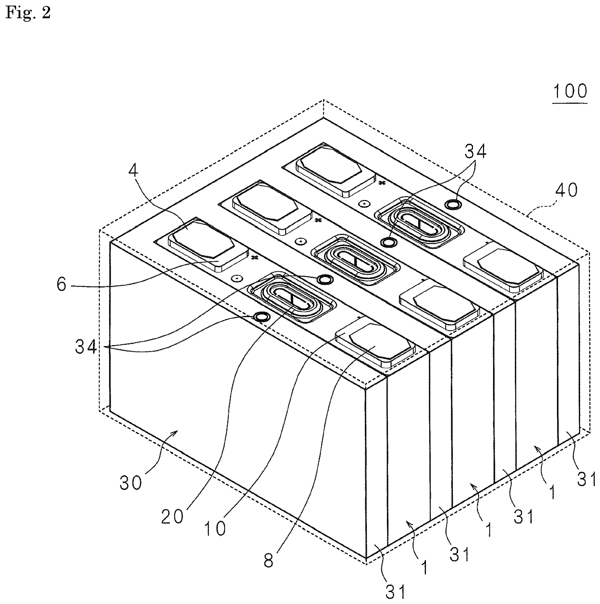

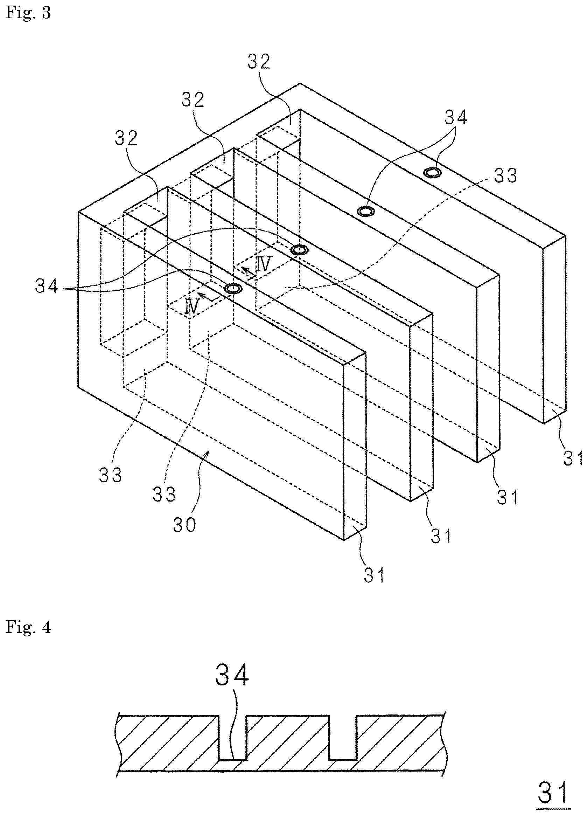

Fig. 2 is a perspective view of an energy storage apparatus 100 according to the present embodiment, and Fig. 3 is a perspective view of a cooling module 30.

The energy storage apparatus 100 includes a plurality of energy storage devices 1 arranged in a first direction, a cooling module (cooling unit) 30 for cooling the energy storage device 1, and a case 40 for housing the energy storage device 1 and the cooling module 30. In Fig. 2, three energy storage devices 1 are housed, but the number of the energy storage devices 1 is not limited to three.

The case 40 has a box shape and is made of, for example, an insulating material such as a synthetic resin. The case 40 protects the energy storage device 1, the cooling module 30 and the like from impact by disposing them at predetermined positions. The case 40 is provided with external electrode terminals (not shown) for externally charging the energy storage device 1 and discharging from the energy storage device 1 to the outside.

The cooling module 30 may be made of a metal having good thermal conductivity and heat resistance, such as aluminum, and may be subjected to an insulating process such as forming an insulating film on the surface.

As shown in Fig. 3, the cooling module 30 includes a plate-shaped cooling unit (heat transfer unit) 31, connecting portions 32 and 33 connecting the cooling units 31, and an internal pressure release valve 34. The two cooling units 31 are interposed between long side surfaces of adjacent energy storage devices 1 in the first direction, and the other two cooling units 31 abut long side surfaces outside energy storage devices 1 at both ends in the first direction. Here, the long side surface is provided so as to extend upward from a long side of a bottom surface of the energy storage device 1 in Fig. 1 and refers to a side surface having the largest area among side surfaces. At the center of upper surface of each cooling unit 31, an internal pressure release valve 34 is provided.

The cooling units 31 may be provided corresponding to the number of the energy storage devices 1, or may be interposed between the energy storage devices 1, and further provided so as to abut the long side surfaces outside the energy storage devices 1 at both ends.

Installation position of the internal pressure release valve 34 is not also limited to the center of the upper surface of the cooling unit 31.

The internal pressure release valve 34 can be installed at a position where fire can be effectively prevented when a flame retardant L described later is ejected. As shown in Fig. 2, the rupture valve 20 of the energy storage device 1 and the internal pressure release valve 34 of the cooling unit 31 may face the same direction. The internal pressure release valve 34 may face upward in the gravity direction.

The cooling unit 31 is hollow.

The cooling unit 31 contains a flame retardant L.

The upper parts of one ends of the long side surfaces of the adjacent cooling units 31 are connected by the connecting portions 32. The connecting portion 32 is hollow, and is configured so that gas in the cooling unit 31 to be connected flows through the connecting portion 32.

The lower parts of one ends of the long side surfaces of the adjacent cooling units 31 are connected by the connecting portions 33. The connecting portion 33 is hollow, and is configured so that the flame retardant L in the cooling unit 31 to be connected flows through the connecting portion 33.

In other words, internal spaces of the cooling unit 31, the connecting portion 32, and the connecting portion 33 communicate with each other.

Note that the outer cooling unit 31 can be omitted. For example, when the number of the energy storage devices 1 is five, four cooling units 31 are disposed between the energy storage devices 1, and the four cooling units 31 are connected by the connecting portions 32 and 33. The long side surface of the outer energy storage device 1 is abutted on a side surface of the case 40. The cooling efficiency is better when the outer cooling unit 31 is provided.

Fig. 4 is a sectional view taken along line IV-IV of Fig. 3.

The internal pressure release valve 34 is a circular groove, and as shown in Fig. 4, the thickness of bottom of the groove is less than the thickness of other parts. The internal pressure release valve 34 is formed by cutting, pressing, or the like. When the internal pressure release valve 34 is formed by cutting, a device capable of cutting a curved surface such as a three-dimensional NC is used. When the internal pressure release valve 34 is formed by pressing, the internal pressure release valve 34 is formed as if a marking is printed by a mold having a protrusion.

The flame retardant L exhibits flame retardancy to flammable gas by being vaporized. The flame retardant L preferably has a large heat of vaporization, has corrosion resistance, and does not generate toxic gas.

The flame retardant L preferably contains at least one of an acyclic fluorinated ether, a fluorinated phosphate ester, and a phosphazene derivative. These have high flame retardancy by being vaporized.

The acyclic fluorinated ether is more preferably represented by the following formula (1).

CX₃₋ⱼHⱼ-(CFₓH₂₋ₓ)ₘ-O-(CF_{y}H_{2-y})ₙ-CF₃₋ₖHₖ... (1)

wherein X is F or CF₃, j, k, m, n, x and y are integers, 0 ≤ j ≤ 3, 0 ≤ k ≤ 3, 1 ≤ m ≤ 3, 0 ≤ n ≤ 1, 0 ≤ x ≤ 2, and 0 ≤ y ≤ 2, and contain at least one fluorine atom.

Specific examples include single or mixtures of two or more of HCF₂CF₂CH₂OCF₂CF₂H, HCF₂CF₂OCH₂CF₃, CF₃CF₂CH₂OCF₂CF₂H, HCF₂CF₂CH₂OCHF₂, CF₃CF₂CH₂OCF₂H, (CF₃)₂CHCF₂OCF₂H, CF₃CHFCF₂CH₂OCHF₂ and the like, and the like, but are not limited thereto.

The fluorinated phosphate ester is more preferably represented by the following formula (2). 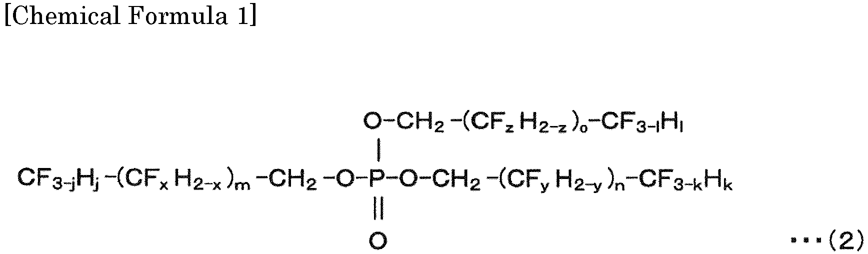 wherein j, k, l, m, n, o, x, y and z are integers, 0 ≤ j ≤ 3, 0 ≤ k ≤ 3, 0 ≤ l ≤ 3, 0 ≤ m ≤ 1, 0 ≤ n ≤ 1, 0 ≤ o ≤ 1, 0 ≤ x ≤ 2, 0 ≤ y ≤ 2, and 0 ≤ z ≤ 2, and contains at least one fluorine atom.

The phosphazene derivative is more preferably represented by the following formula (3). 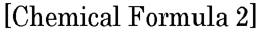 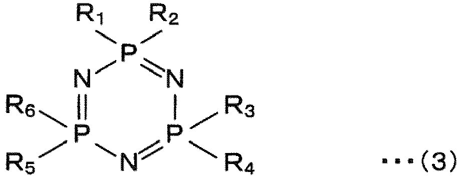 wherein R₁ to R₆ represent identical or non-identical hydrogen atoms, halogen atoms, linear or branched alkyl groups having 1 to 10 carbon atoms, alkyl groups having 1 to 10 carbon atoms substituted with a fluorine atom, alkoxy groups having 1 to 10 carbon atoms, or alkoxy groups having 1 to 10 carbon atoms substituted with a fluorine atom.

The phosphazene derivative is further preferably a fluorine-containing phosphazene derivative in which at least one of R₁ to R₆ is either a fluorine atom, an alkyl group substituted with a fluorine atom, or an alkoxy group substituted with a fluorine atom.

Among the fluorine-containing phosphazene derivatives, monoethoxypentafluorocyclotriphosphazene represented by the following chemical formula 3 and monophenoxypentafluorocyclotriphosphazene represented by the following chemical formula 4 are particularly preferable.

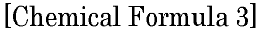

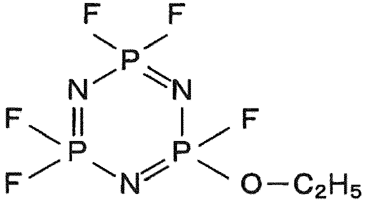

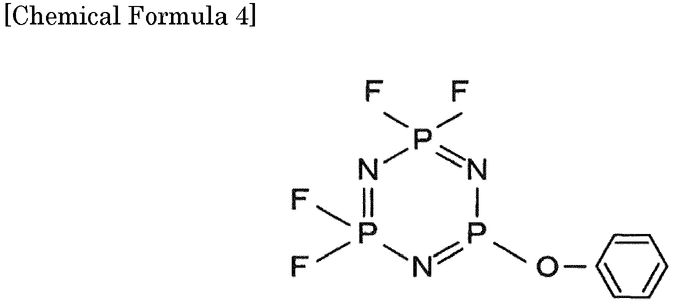

The capacity of the flame retardant L is set based on the cooling unit 31, and an internal capacity of the connecting portions 32 and 33, assumed heat generation temperature of the energy storage device 1, volume when the flame retardant L is vaporized, and the like, so as not to damage the cooling unit 31.

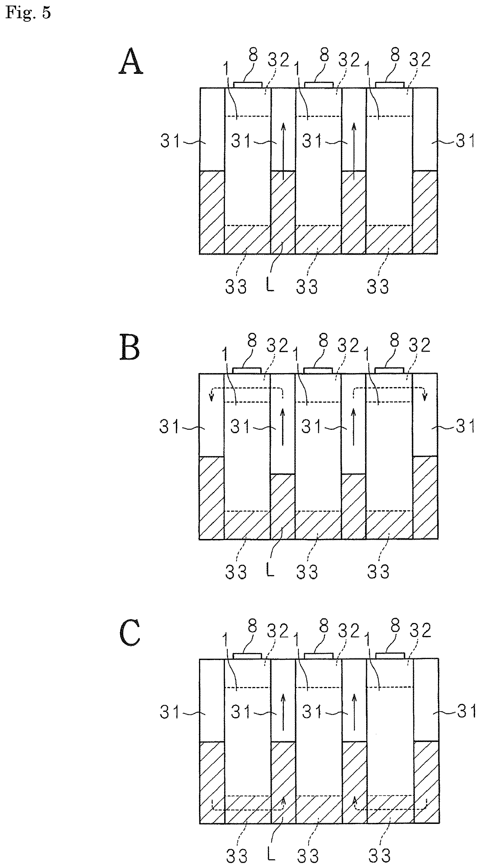

Fig. 5 is an explanatory diagram illustrating cooling by the cooling module 30 when the energy storage device 1 generates heat.

It is assumed that the cooling module 30 contains the flame retardant L (although water may be contained as an alternative liquid), and the central energy storage device 1 generates heat.

Heat is conducted from the heated energy storage device 1 to the cooling units 31 and 31 on both sides, and the flame retardant L in the cooling unit 31 evaporates (Fig. 5A). When the flame retardant L evaporates, heat of vaporization is taken away, and the energy storage device 1 is rapidly cooled by an endothermic reaction. The liquid amount of the flame retardant L in the cooling unit 31 decreases.

The gas in the cooling unit 31 flows upward by thermal convection, passes through the connecting portions 32 and 32, and moves to the outer cooling unit 31 having a low temperature (Fig. 5B). The gas condenses in the outer cooling unit 31, and the liquid amount of the flame retardant L in the outer cooling unit 31 increases.

As the increased amount of the flame retardant L in the outer cooling unit 31, the flame retardant L flows to the inner cooling unit 31 through the connecting portion 33, and the liquid amounts of the flame retardant L in the four cooling units 31 become equal (Fig. 5C). The circulated flame retardant L also absorbs heat generated by the energy storage device 1, vaporizes, and circulates similarly as described above.

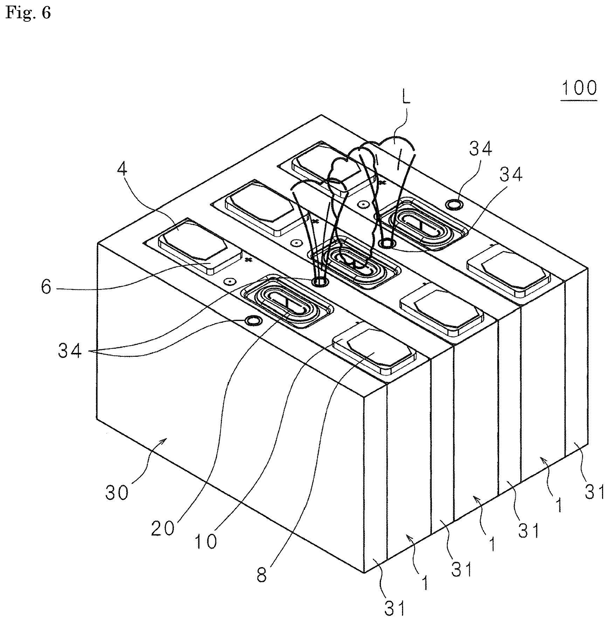

Fig. 6 is an explanatory diagram illustrating suppression of fire by a flame retardant.

When the temperature of the energy storage device 1 rises rapidly, the amount of heat absorbed from the energy storage device 1 increases, and the amount of evaporation of flame retardant L increases. When the internal pressure of the cooling unit 31 which abuts on the energy storage device 1 reaches a predetermined value or more, the internal pressure release valve 34 of the cooling unit 31 is opened, and the vaporized flame retardant L is released to the outside, specifically, in a second direction orthogonal to the first direction described above (for example, upward in the gravity direction). Fig. 6 shows a state in which the internal pressure release valves 34 of the cooling units 31 on both sides of the energy storage device 1 are opened, and the flame retardant L is released. When the internal pressure of the outer cooling unit 31 also reaches a predetermined value or more, the internal pressure release valve 34 opens.

When the internal pressure of the energy storage device 1 reaches a predetermined value or more, a rupture valve 20 opens, and the flammable component of the volatilized electrolyte solution is released to the outside. The flammable component is made flame-retardant by the flame retardant L, so that fire is prevented.

As described above, an energy storage apparatus 100 of the present embodiment includes a plurality of energy storage devices 1, and a cooling unit 31 that is disposed at least between the energy storage devices 1, incorporates a flame retardant L, and cools the energy storage device 1 by heat of vaporization of the flame retardant L.

According to the above configuration, when the flame retardant L in the cooling unit 31 in contact with the energy storage device 1 that has generated heat evaporates, it takes away heat of vaporization, so that the energy storage device 1 is cooled well. Since the cooling unit 31 is disposed at least between the energy storage devices 1, conduction of heat to an energy storage device 1 adjacent to a heated energy storage device 1 is suppressed. Even when heat is transferred to the adjacent energy storage device 1 not via the cooling unit 31, a long side surface facing the heated energy storage device 1 is cooled by the cooling unit 31. Therefore, chain heat transfer to the energy storage device 1 is suppressed.

Cooling structure of the cooling module 30 is simple, and the energy storage device 1 can be also cooled even when a small amount of heat is generated.

Since the flame retardant L is incorporated in the cooling unit 31, it is vaporized, then liquefied in the cooling unit 31, reused for cooling the energy storage device 1, and efficiently cools the energy storage device 1.

In the above-described energy storage apparatus 100, the flame retardant L exhibits flame retardancy to a flammable gas by being vaporized.

According to the above configuration, when the flame retardant L absorbs heat and vaporizes from the heated energy storage device 1 and is released from the internal pressure release valve 34, the flame retardant L is mixed with a flammable component released from the energy storage device 1 and the flammable component is made flame-retardant, so that fire is prevented in the energy storage apparatus 100.

In the above-described energy storage apparatus 100, the flame retardant L includes at least one of an acyclic fluorinated ether, a fluorinated phosphate ester, and a phosphazene derivative.

According to the above configuration, the flame retardant L has high flame retardancy by being vaporized.

In the above-described energy storage apparatus 100, the cooling module 30 has a connecting portion that connects a plurality of the cooling units 31 so that internal spaces communicate with each other.

According to the above configuration, in one cooling unit 31 in contact with the heated energy storage device 1, a gas generated by vaporization of the flame retardant L passes through the connecting portions 32 and 33 by thermal convection, and flows to other cooling unit 31. The gas is liquefied in the other cooling unit 31 and flows to the one cooling unit 31, and the flame retardant L circulates.

Therefore, the flame retardant L is reused for cooling the energy storage device 1, and the energy storage device 1 is efficiently cooled.

In addition, the heated gas flows from one cooling unit 31 to the other cooling unit 31 via the connecting portions 32 and 33, so that a temperature difference between a long side surface in contact with the one cooling unit 31 and a long side surface in contact with the other cooling unit 31 is reduced, in one energy storage device 1, and the temperature difference between the energy storage devices 1 is reduced. Then, by circulation of the gas and the flame retardant L, the temperature difference between the plurality of the energy storage devices 1 can be reduced and the plurality of the energy storage devices 1 can be efficiently cooled. Even when a small amount of heat is generated, which is not abnormal, the heat from the energy storage devices 1 is radiated well by the cooling unit 31, and the temperature difference between the energy storage devices 1 is reduced.

In the energy storage apparatus 100 described above, the cooling unit 31 has an internal pressure release valve 34 that releases internal pressure of the cooling unit 31 when the internal pressure exceeds a predetermined pressure.

According to the above configuration, when the amount of evaporation of the flame retardant L is large and the internal pressure of the cooling unit 31 exceeds a predetermined pressure, the internal pressure release valve 34 is opened and the gas is released to the outside. The release of the gas prevents the cooling unit 31 from expanding and the energy storage device 1 from being pressed.

When the temperature in the energy storage device 1 rises rapidly, the amount of heat absorbed from the energy storage device 1 increases, and the amount of evaporation of flame retardant L increases. When the internal pressure reaches a predetermined value or more, the vaporized flame retardant L is released to the outside by opening the cooling unit 31. When the internal pressure of the energy storage device 1 reaches a predetermined value or more, the energy storage device 1 opens, and the flammable component of the volatilized electrolyte solution is released to the outside. The flammable component is made flame-retardant by the flame retardant L, so that fire is prevented.

Even when the energy storage device 1 at the end, not at the center, generates heat, the heat is absorbed by the cooling unit 31 similarly as described above, and the energy storage device 1 is rapidly cooled. The long side surface of the adjacent energy storage device 1 facing the heated energy storage device 1 is also rapidly cooled, heat transfer from the heated energy storage device 1 is suppressed, and a chain of overheating between the energy storage devices is prevented.

Note that the structure of the cooling module 30 is not limited to the structure of Fig. 3. A connecting portion may be provided such that a rectangular tube penetrates upper and lower parts of each one end of the four cooling units 31 in the longitudinal direction.

### (Second Embodiment)

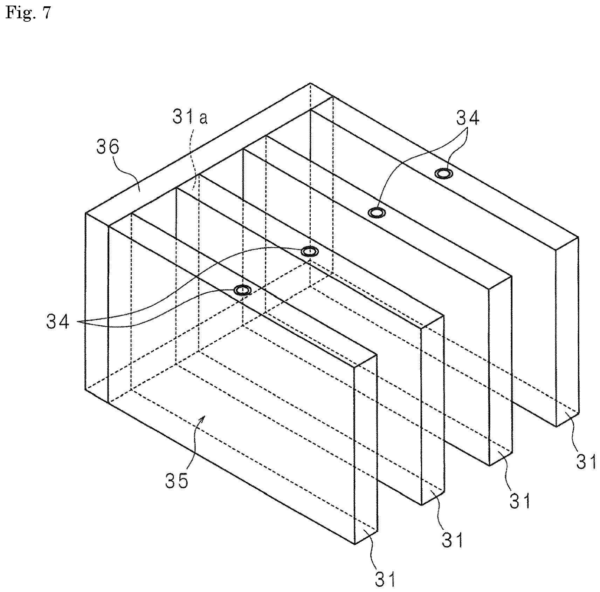

Fig. 7 is a perspective view of a cooling module 35 according to a second embodiment. In the figure, the same parts as those in Fig. 3 are denoted by the same reference numerals, and detailed description is omitted.

The cooling module 35 includes four cooling units 31 and a cooling plate 36.

In the cooling module 35, unlike the first embodiment in which the four cooling units 31 are connected by the connecting portions 32 and 33, end surfaces 31a of the four cooling units 31 abut the cooling plate 36. The cooling unit 31 contains a flame retardant L as in the first embodiment.

The internal spaces of the cooling unit 31 and the cooling plate 36 may or may not be communicated.

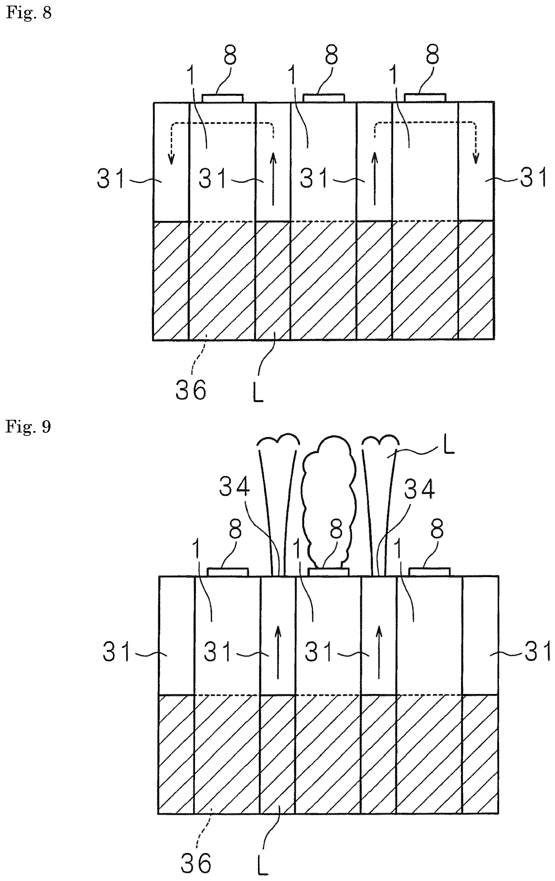

Fig. 8 is an explanatory diagram of a case where internal spaces are communicated in the present embodiment. An energy storage device 1 is inserted between cooling units 31, and the cooling unit 31 and a cooling plate 36 contain a flame retardant L.

When the central energy storage device 1 generates heat, as in the first embodiment, the flame retardant L in the cooling unit 31 which abuts on the energy storage device 1 takes heat of vaporization away from the energy storage device 1 and evaporates, and the energy storage device 1 is quenched. The liquid amount of the flame retardant L in the cooling unit 31 decreases. The generated gas flows to other cooling unit 31 via the cooling plate 36, and the flame retardant L generated by condensation flows to a cooling unit 31 in which the liquid amount of the flame retardant L is reduced. The flame retardant L also absorbs heat to cool the energy storage device 1, and the generated gas circulates as described above. The cooling plate 36 also cools a side surface of the energy storage device 1 which abuts thereon.

In a case where the internal spaces are not communicated, when the energy storage device 1 generates heat, the flame retardant L in the cooling unit 31 which abuts on the energy storage device 1 takes heat of vaporization away from the energy storage device 1, and the energy storage device 1 is quenched. The generated gas is cooled by the cooling plate 36 and condensed to the flame retardant L. The flame retardant L absorbs heat from the energy storage device 1 and vaporizes, and the energy storage device 1 is cooled.

Also in the present embodiment, the cooling module 35 with a simple structure suppresses conduction of heat to the energy storage device 1 adjacent to the heated energy storage device 1, and chain heat transfer to a further adjacent energy storage device 1 is suppressed.

Fig. 9 is an explanatory diagram illustrating suppression of fire by a flame retardant L.

When the temperature of the energy storage device 1 rises rapidly, the amount of heat absorbed from the energy storage device 1 increases, and the amount of evaporation of flame retardant L increases. When the internal pressure of a cooling unit 31 which abuts on an energy storage device 1 reaches a predetermined value or more, an internal pressure release valve 34 opens, and the vaporized flame retardant L is released to the outside. When the internal pressure of the energy storage device 1 reaches a predetermined value or more, a rupture valve 20 opens, and the flammable component of the volatilized electrolyte solution is released to the outside. The flammable component is made flame-retardant by the flame retardant L, so that fire is prevented.

In the energy storage apparatus of the present embodiment, each of the energy storage devices 1 is formed in a rectangular parallelepiped shape, and the energy storage apparatus includes a cooling plate 36 that is in contact with a surface different from a long side surface opposed to the cooling unit 31 of each of the energy storage devices 1 to cool the plurality of the energy storage devices 1, and is configured to be thermally conductive between the cooling plate 36 and the cooling unit 31.

According to the above configuration, since heat is conducted between the cooling plate 36 and the cooling unit 31, heat is radiated well. The gas generated by vaporization of the flame retardant L is cooled and liquefied, and the flame retardant L again absorbs heat from the energy storage device 1 so that the energy storage device 1 can be cooled.

In the energy storage apparatus described above, the cooling plate 36 and the cooling unit 31 are integrated so that the flame retardant L or a gas obtained by vaporizing the flame retardant L can be circulated.

According to the above configuration, in one cooling unit 31 in contact with the heated energy storage device 1, a gas generated by vaporization of the flame retardant L passes through the cooling plate by thermal convection, and flows to other cooling unit 31. The gas is liquefied in the other cooling unit 31 and flows to the one cooling unit 31, and the flame retardant L circulates.

Therefore, the flame retardant L is reused for cooling the energy storage device 1, and efficiently cools the energy storage device 1.

Further, the temperature difference between one long side surface and the other long side surface of one energy storage device 1 is reduced, and the temperature difference between energy storage devices 1 is reduced. Then, by circulation of the gas and the flame retardant L, the temperature difference between the plurality of the energy storage devices 1 can be reduced and the plurality of the energy storage devices 1 can be efficiently cooled. Even when a small amount of heat is generated, which is not abnormal, the heat from the energy storage devices 1 is radiated well by the cooling unit 31, and the temperature difference between the energy storage devices 1 is reduced.

### (Third Embodiment)

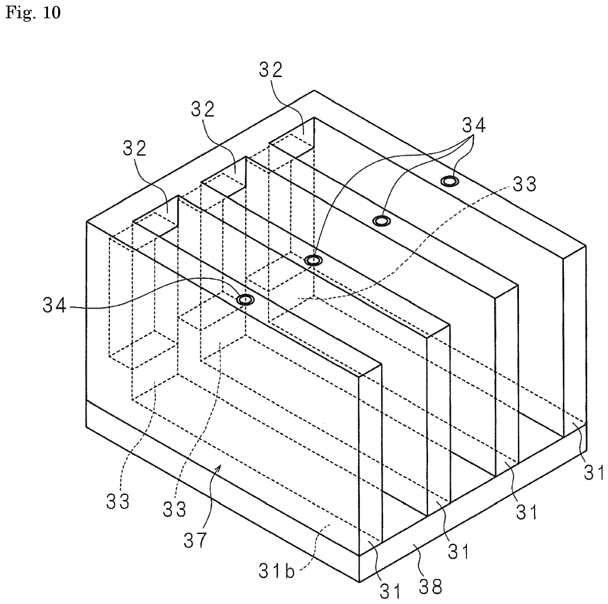

Fig. 10 is a perspective view of a cooling module 37 according to a third embodiment. In the figure, the same parts as those in Fig. 3 are denoted by the same reference numerals, and detailed description is omitted.

The cooling module 37 of the third embodiment has a configuration in which bottom surfaces 31b of four cooling units 31 of the cooling module 30 of the first embodiment abut on a cooling plate 38. As in the first embodiment, the cooling unit 31 contains a flame retardant L (not shown).

Internal spaces of the cooling unit 31 and the cooling plate 38 are not communicated. The cooling plate 38 may be configured to be cooled by a cooling device (not shown).

When a central energy storage device 1 generates heat, as in the first embodiment, the flame retardant L in the cooling unit 31 which abuts on the energy storage device 1 evaporates, and the energy storage device 1 is quenched by heat of vaporization at the time of evaporation. The generated gas flows through other cooling unit 31, and the flame retardant L generated by condensation flows to a cooling unit 31 in which the liquid amount of the flame retardant L is small. The cooling plate 38 cools a bottom surface of the energy storage device 1 and also cools the cooling unit 31. The flame retardant L in the cooling unit 31 which abuts on the energy storage device 1 also absorbs heat from the energy storage device 1 and evaporates, and the energy storage device 1 is cooled.

Also in the present embodiment, as in the first embodiment and the second embodiment, the cooling module 37 with a simple structure suppresses conduction of heat to the energy storage device 1 adjacent to the heated energy storage device 1, and chain heat transfer to a further adjacent energy storage device 1 is suppressed.

When the temperature in the energy storage device 1 rises rapidly, the amount of heat absorbed from the energy storage device 1 increases, and the amount of evaporation of flame retardant L increases. When the internal pressure reaches a predetermined value or more, the internal pressure release valve 34 opens, and the vaporized flame retardant L is released to the outside. When the internal pressure of the energy storage device 1 reaches a predetermined value or more, a rupture valve 20 opens, and the flammable component of the volatilized electrolyte solution is released to the outside.

The flammable component is made flame-retardant by the flame retardant L, so that fire is prevented.

### (Fourth Embodiment)

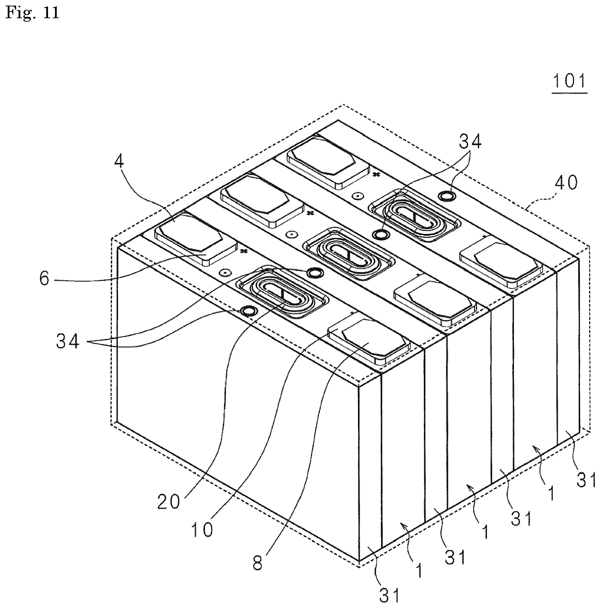

Fig. 11 is a perspective view of an energy storage apparatus 101 according to a fourth embodiment. In the figure, the same parts as those in Fig. 2 are denoted by the same reference numerals, and detailed description is omitted.

The energy storage apparatus 101 does not have connecting portions 32 and 33 that connect cooling units 31, unlike the energy storage apparatus 100 according to the first embodiment. The cooling unit 31 is independently disposed between energy storage devices 1 or between the energy storage device 1 and an inner surface of a case 40. The cooling unit 31 contains a flame retardant L (not shown).

When the energy storage device 1 generates heat, the flame retardant L in the cooling unit 31 which abuts on the energy storage device 1 takes heat of vaporization away from the energy storage device 1 and evaporates, and the energy storage device 1 is quenched. The generated gas convects, is cooled by the outside and/or outside air of the energy storage apparatus 101, and is condensed to the flame retardant L. The flame retardant L absorbs heat from the energy storage device 1 and vaporizes, and the energy storage device 1 is cooled.

In the present embodiment, since the cooling unit 31 is interposed between the energy storage devices 1, as in the first embodiment, the heated energy storage device 1 is cooled by the cooling units 31 on both sides, and heat transfer to an adjacent energy storage device 1 is suppressed. Even when heat is transferred to the adjacent energy storage device 1 not via the cooling unit 31, a long side surface facing the heated energy storage device 1 is cooled by the cooling unit 31. Therefore, chain heat transfer to the adjacent energy storage device 1 is suppressed.

When the temperature in the energy storage device 1 rises rapidly, the amount of heat absorbed from the energy storage device 1 increases, and the amount of evaporation of flame retardant L increases. When the internal pressure reaches a predetermined value or more, the internal pressure release valve 34 opens, and the vaporized flame retardant L is released to the outside. When the internal pressure of the energy storage device 1 reaches a predetermined value or more, a rupture valve 20 opens, and the flammable component of the volatilized electrolyte solution is released to the outside.

The flammable component is made flame-retardant by the flame retardant L, so that fire is prevented.

The present invention is not limited to the contents of the above-described embodiments, and various modifications can be made within the scope shown in the claims. That is, embodiments obtained by combining technical means appropriately changed within the scope of the claims are also included in the technical scope of the present invention.

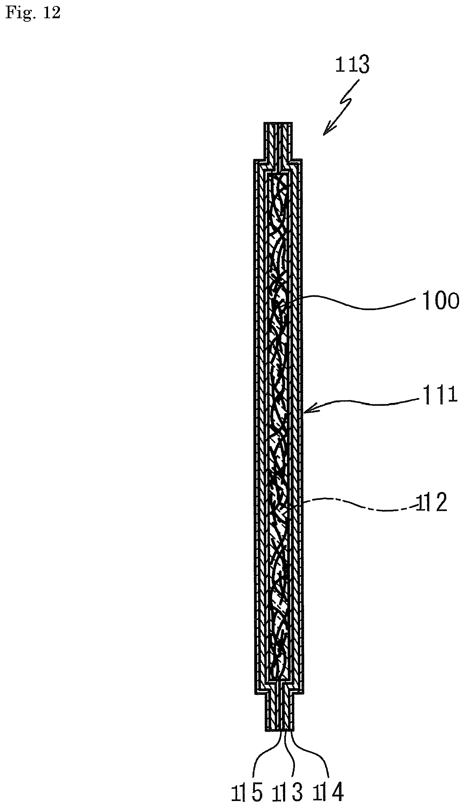

A cooling unit (heat transfer unit) disposed between energy storage devices may be in the form of a partition member shown in Fig. 12. A partition member 113 has an inorganic paper sheet 100 mainly composed of inorganic fibers, a bag body 111 containing the inorganic paper sheet in an internal space, and a flame retardant (or water) 112 that is impregnated in the inorganic paper sheet 100 and vaporizes by heating. The inorganic paper sheet 100 is a sheet formed by making inorganic fibers into paper, and has a void for holding a liquid between the inorganic fibers. The porosity of the inorganic paper sheet 100 may be 45% by volume or more and 80% by volume or less. The term "the porosity of the inorganic paper sheet" refers to a value obtained by calculating the volume per unit area of the inorganic paper sheet using the thickness measured by a thickness gauge, and calculating the volume of the inorganic fibers per unit area of the inorganic paper sheet from the specific gravity of the inorganic fiber and the weight of the inorganic fiber used per unit area of the inorganic paper sheet, that is calculated as a ratio of the difference between these volumes to the volume per unit area of the inorganic paper sheet. The bag body 111 may be formed from a laminate sheet in which an aluminum foil (metal layer) 113 and a resin film (resin layer) 114 are joined. A sheet forming the bag body 111 may further have an adhesive layer 15 made of resin on the inner surface of the metal layer 113 so as to enable adhesion by heat sealing. When any of the energy storage devices 1 is overheated, the flame retardant (or water) may evaporate and be ejected from the bag body 111. In the energy storage apparatus, the plurality of the energy storage devices 1 may be laminated in a first direction with a partition member 131 interposed therebetween, and may be held by a holding member such as a case 40 or a restraining member in a state of being pressed in the first direction.

In the first to fourth embodiments, a case where a positive electrode terminal 4 and a negative electrode terminal 8 of the energy storage device 1 are disposed so as to face upward is described, but the present invention is not limited thereto. Even when the positive electrode terminal 4 and the negative electrode terminal 8 are disposed so as to face sideways, the cooling structure of the present invention can be applied.

Further, a case where the energy storage device 1 is a lithium ion secondary battery is described, but the energy storage device 1 is not limited to a lithium ion secondary battery. The energy storage device 1 may be other secondary battery having an organic solvent, may be a primary battery, or may be an electrochemical cell such as a capacitor.

The energy storage apparatus according to the present invention can be particularly suitably used as a power source for vehicles. In addition, the energy storage apparatus according to the present invention can also be suitably used for industrial applications like an energy storage system (large-scale energy storage system, small-scale home energy storage system), a distributed power supply system combined with natural energy such as solar light and wind power, a power supply system for railways, and an automatic guided vehicle (AGV) power supply system.

### DESCRIPTION OF REFERENCE SIGNS

- 1: Energy storage device
- 2: Cover plate
- 3: Case body
- 4: Positive electrode terminal
- 8: Negative electrode terminal
- 6, 10: Gasket
- 11: Case
- 20: Rupture valve
- 30, 35, 37: Cooling module
- 31: Cooling unit
- 32, 33: Connecting portion
- 34: Internal pressure release valve
- 36, 38: Cooling plate
- 40: Case
- 100, 101: Energy storage apparatus

## Claims

1. An energy storage apparatus comprising:
a plurality of energy storage devices, and
a cooling unit that is disposed at least between the energy storage devices, incorporates a flame retardant, and cools the energy storage device by heat of vaporization of the flame retardant.

2. The energy storage apparatus according to claim 1, wherein the flame retardant exhibits flame retardancy by being vaporized.

3. The energy storage apparatus according to claim 2, wherein the flame retardant contains at least one of an acyclic fluorinated ether, a fluorinated phosphate ester, and a phosphazene derivative.

4. The energy storage apparatus according to any one of claims 1 to 3, comprising a connecting portion that connects a plurality of the cooling units so that internal spaces communicate with each other.

5. The energy storage apparatus according to any one of claims 1 to 4, wherein
each of the energy storage devices is formed in a rectangular parallelepiped shape,
the energy storage apparatus comprises a cooling plate that is in contact with a surface different from a long side surface opposed to the cooling unit of each of the energy storage devices to cool the plurality of the energy storage devices, and
the energy storage apparatus is configured to be thermally conductive between the cooling plate and the cooling unit.

6. The energy storage apparatus according to claim 5, wherein the cooling plate and the cooling unit are integrated so that the flame retardant or a gas obtained by vaporizing the flame retardant can be circulated.

7. The energy storage apparatus according to any one of claims 1 to 6, wherein the cooling unit has an internal pressure release valve that releases internal pressure of the cooling unit when the internal pressure exceeds a predetermined pressure.

8. An energy storage apparatus comprising:
a plurality of energy storage devices, and
a cooling unit for cooling the energy storage device, wherein
the cooling unit has a heat transfer unit that incorporates a liquid, is disposed at least between the energy storage devices, and contacts the energy storage device to cool the energy storage device by heat of vaporization of the liquid.

9. The energy storage apparatus according to claim 8, comprising a connecting portion that connects a plurality of the heat transfer units so that internal spaces communicate with each other.

10. The energy storage apparatus according to claim 8 or 9, wherein each of the energy storage devices is formed in a rectangular parallelepiped shape,
the cooling unit includes a cooling plate that is in contact with a surface different from a long side surface with which the heat transfer unit of each of the energy storage devices to cool the plurality of the energy storage devices, and
the cooling unit is configured to be thermally conductive between the cooling plate and the heat transfer unit.

11. The energy storage apparatus according to claim 10, wherein the cooling plate and the heat transfer unit are integrated so that the liquid or a gas obtained by vaporization of the liquid can be circulated.

12. The energy storage apparatus according to any one of claims 8 to 11, wherein the cooling unit has an internal pressure release valve that releases internal pressure of the cooling unit when the internal pressure exceeds a predetermined pressure.
